# EUROPÄISCHE PATENTANMELDUNG

(11) **EP 2 799 741 A1**
(43) Veröffentlichungstag der Anmeldung: **05.11.2014**
(21) Anmeldenummer: 14162749.7
(22) Anmeldetag: 31.03.2014
(51) Int. Cl.: F16H 57/027

(54) **Be- und Entlüftungsvorrichtung**

(30) Priorität: 30.04.2013 DE 102013207969
(71) Anmelder: ZF Friedrichshafen AG, 88038 Friedrichshafen (DE)
(72) Erfinder: Lenz, Paul, 94065 Waldkirchen (DE); Alesch, Klaus, 94107 Untergriesbach (DE)

(57) **Zusammenfassung**

Die Erfindung bezieht sich auf eine Be- und Entlüftungsvorrichtung für einen Öl enthaltenden geschlossenen Behälter eines Kraftfahrzeugs, mit einem den Behälter mit der Atmosphäre verbindenden Leitung, die bei Volumenänderungen im Behälter einen Druckausgleich zur Umgebung ermöglicht. Mit einem in der Leitung angeordneten gasdurchlässigen, flüssigkeitsundurchlässigen Filterelement (21). Mit einem von dem Behälter zum Filterelement (21) führenden ersten Teil (31) der Leitung und einem von dem Filterelement (21) zur Umgebung führenden zweiten Teil (32) der Leitung. Dabei liegt das in die Umgebung mündende Ende des von dem Filterelement (21) zur Umgebung führenden zweiten Teils (32) der Leitung auf einem tieferen Niveau als der erste Teil (31) der Leitung. Der Querschnitt des ersten Teils (31) der Leitung ist mindestens so groß, dass die Oberflächenspannung von in diesem ersten Teil (31) der Leitung befindlichem Öl geringer ist, als sie zum Verschließen des Querschnitts des ersten Teils (31) der Leitung erforderlich ist.

## Beschreibung

Die Erfindung bezieht sich auf eine Be- und Entlüftungsvorrichtung für einen Öl enthaltenden geschlossenen Behälter eines Kraftfahrzeugs, mit einem den Behälter mit der Atmosphäre verbindenden Leitung, die bei Volumenänderungen im Behälter einen Druckausgleich zur Umgebung ermöglicht, mit einem in der Leitung angeordneten gasdurchlässigen, flüssigkeitsundurchlässigen Filterelement, mit einem von dem Behälter zum Filterelement führenden ersten Teil der Leitung und einem von dem Filterelement zur Umgebung führenden zweiten Teil der Leitung, wobei das in die Umgebung mündende Ende des von dem Filterelement zur Umgebung führenden zweiten Teils der Leitung auf einem tieferen Niveau als der erste Teil der Leitung liegt.

Derartige Be- und Entlüftungsvorrichtungen dienen dazu Behälter wie z.B. Achsgehäuse in Kraftfahrzeugen zu be- und entlüften. Dazu ist es bekannt die Be- und Entlüftungsvorrichtung über eine Schlauchleitung mit dem zu entlüftenden Achsgehäuse zu verbinden, so dass die mit Ölpartikeln angereicherte Luft durch die Schlauchleitung zu einer gaspermeablen Filtermembran im Filtergehäuse geleitet wird. Dabei lässt die Filtermembran die Luft hindurch, weist aber das in der Luft enthaltende Öl ab, so dass dieses Öl über die Schlauchleitung wieder in das Achsgehäuse zurückfließt. Die durch die Filtermembran hindurchgetretene Luft gelangt über eine weitere Schlauchleitung nach außen in die Umgebung. Reduziert sich das Volumen des im Achsgehäuse enthaltenen und durch den Fahrbetrieb des Kraftfahrzeugs erwärmten Öls nach Beendigung des Fahrbetriebs wieder, so wird ein Unterdruck im Achsgehäuse dadurch vermieden, dass Luft von außen über die weitere Leitung in das Achsgehäuse gelangen kann. Feuchtigkeit oder Wasser sowie Schmutz, die dabei mit angesaugt werden können, werden durch die Filtermembran an einem Eindringen in das Achsgehäuse gehindert.

Bei derartigen Be- und Entlüftungsvorrichtungen besteht das Problem, dass in dem ersten Teil der Leitung stehendes Öl als Ölpfropfen den Durchgang der Leitung vollständig verschließt. Durch die Bewegungen des Kraftfahrzeugs kommt es zu einer Hin- und Herbewegung des Ölpfropfens in dem ersten Teil der Leitung und damit zu einem Pumpeffekt. Dies führt dazu, dass von außen über den zweiten Teil der Leitung Wasser in das Gehäuse und/oder Öl aus dem Gehäuse nach außen gepumpt wird. Dadurch kann es auch zu einem Verkleben des Filterelements durch das austretende Öl kommen.

Aufgabe der Erfindung ist es daher eine Be- und Entlüftungsvorrichtung der eingangs genannten Art zu schaffen, die einen derartigen Pumpeffekt vermeidet.

Diese Aufgabe wird erfindungsgemäß dadurch gelöst, dass der Querschnitt des ersten Teils der Leitung mindestens so groß ist, dass die Oberflächenspannung von in diesem ersten Teil der Leitung befindlichem Öl geringer ist, als sie zum Verschließen des Querschnitts des ersten Teils der Leitung erforderlich ist.

Durch die Größe des Querschnitts der Leitung kann sich kein den ersten Teil der Leitung verschließender Ölpfropfen bilden, so dass auch ein Pumpeffekt vermieden wird.

Weist der erste Teil der Leitung einen annähernd waagrechten Abschnitt auf, wobei der annähernd waagrechte Abschnitt des ersten Teils der Leitung eine geringe Neigung zum Behälter hin aufweisen kann, was aufgrund der Einbauverhältnisse erforderlich sein kann, so besteht eine erhöhte Gefahr des Bildens eines Ölpfropfens in diesem Abschnitt, was durch die erfindungsgemäße Größe des Querschnitts vermieden wird.

Der Behälter kann ein teilweise mit dem Öl gefülltes Getriebegehäuse oder ein Achsgehäuse sein.

Um ein Eindringen von Wasser, Feuchtigkeit und Schmutz über das in die Umgebung mündende Ende des zweiten Teils der Leitung zum Filterelement weitgehend zu vermeiden, kann sich der zur Umgebung führende zweite Teil der Leitung vom Filterelement aus ganz oder teilweise annähernd vertikal nach unten erstrecken.

Das Filterelement kann eine Membran sein, die nur geringen Bauraum erfordert und gute gasdurchlässige und flüssigkeitsundurchlässige Eigenschaften aufweist.

Erstreckt sich die Ebene der Membran annähernd vertikal, so kann sich weitgehend weder Öl noch Wasser oder Schmutz auf der Membran ablagern und diese verschließen.

Dies wird weiterhin noch dadurch unterstützt, wenn der erste Teil und/oder der zweite Teil der Leitung an dem unteren Bereich des Filterelements zum Filterelement hin münden, da dann Öl, Wasser und Schmutz zum größten Teil der Membran nicht gelangen kann.

Der erste und/oder der zweite Teil der Leitung können zur Erleichterung der Montage und zur Ausnutzung des günstigsten Erstreckungsweges ganz oder teilweise als Rohr und/oder als flexibler Schlauch ausgebildet sein.

Wenn das zur Umgebung führende Ende des zweiten Teils der Leitung abgeschrägt ausgebildet ist, kann den zweiten Teil der Leitung beaufschlagendes Spritzwasser schnell wieder abtropfen sowie dieses Ende aufgrund der Fahrbewegungen des Kraftfahrzeugs vibrieren und anhaftenden Schmutz durch das Vibrieren abschütteln.

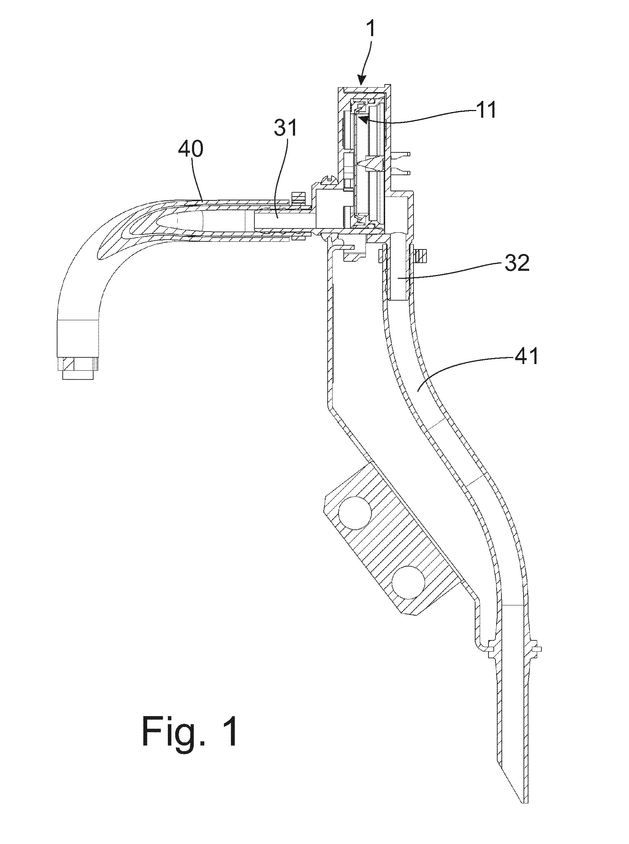

Ein Ausführungsbeispiel der Erfindung ist in der Zeichnung dargestellt und wird im Folgenden näher beschrieben. Es zeigen
- Figur 1: eine Seitenansicht einer Be- und Entlüftungsvorrichtung mit Anschlüssen im Querschnitt

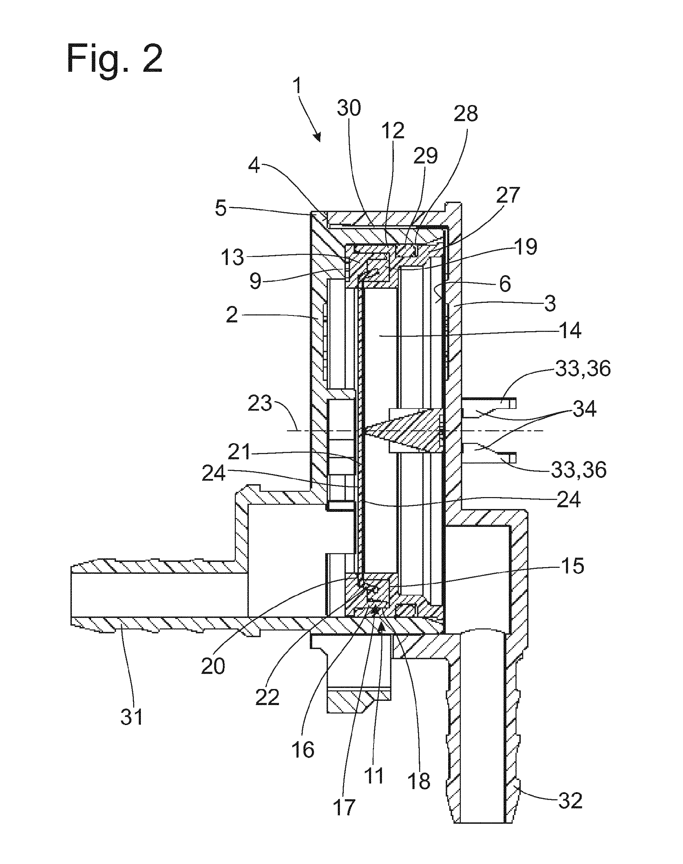

- Figur 2: eine vergrößerte Darstellung der Be- und Entlüftungsvorrichtung nach Figur 1

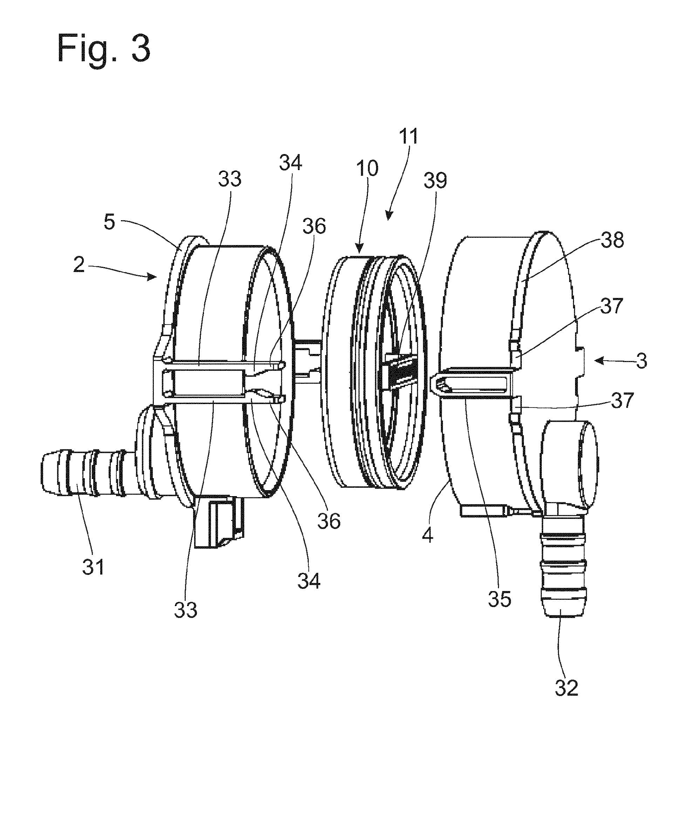

- Figur 3: eine Explosionsdarstellung der Be- und Entlüftungsvorrichtung nach Figur 1

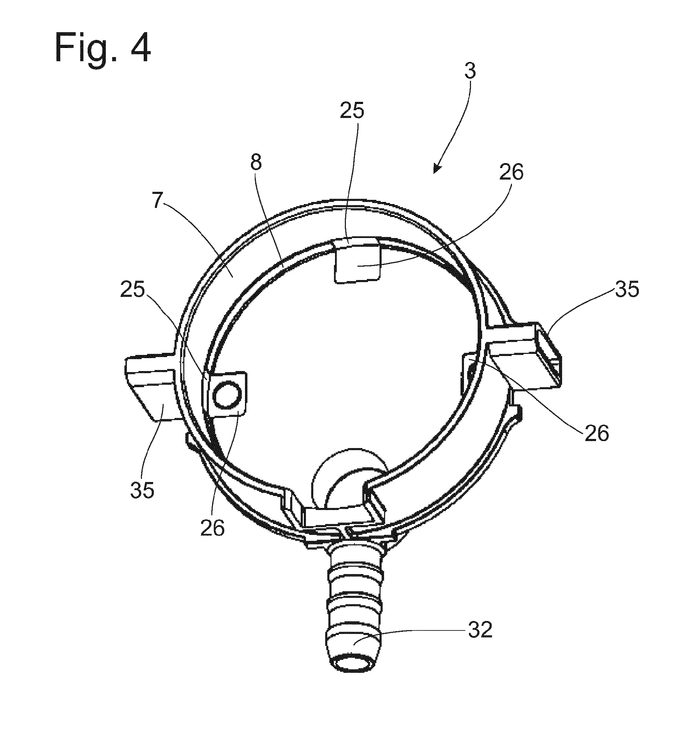

- Figur 4: eine perspektivische Darstellung des zweiten Gehäuseteils der Be- und Entlüftungsvorrichtung nach Figur 1.

Die dargestellte Be- und Entlüftungsvorrichtung für ein Achsgehäuse runden Querschnitts eines Kraftfahrzeugs weist ein Filtergehäuse 1 auf, das aus einem topfartigen ersten Gehäuseteil 2 und einem topfartigen zweiten Gehäuseteil 3 besteht. Die zylindrische Außenkontur des ersten Gehäuseteils 2 entspricht mit gering größerem Durchmesser der Innenkontur des zweiten Gehäuseteils 3.

Mit ihren Topföffnungen einander zugewandt ist das erste Gehäuseteil 2 in das zweite Gehäuseteil 3 einführbar, bis das zweite Gehäuseteil 3 mit seiner Stirnseite 4 an einem flanschartigen Anschlag 5 des ersten Gehäuseteils 2 zur Anlage kommt.

Anschließend an den Boden 6 des zweiten Gehäuseteils 3 weist dieses an seiner Innenwand 7 einen radial umlaufenden Ringansatz 8 auf, dessen Durchmesser dem Durchmesser der zylindrischen Außenkontur des ersten Gehäuseteils 2 entspricht und dieses bei in das zweite Gehäuseteil 3 vollständig eingeführter Position konzentrisch zum zweiten Gehäuse 3 positioniert.

Der Boden des ersten Gehäuseteils 2 besitzt in seinem radial äußeren Bereich eine Ringstufe 9, an der ein eine Durchgangsöffnung 14 aufweisender ringförmiger Rahmen 10 einer Filtereinheit 11 axial abgestützt ist.

Der Rahmen 10 besteht aus einem ringförmigen ersten Rahmenteil 12 und einem dazu koaxialen ringförmigen zweiten Rahmenteil 13.

Das erste Rahmenteil 13 weist an seinem an der Ringstufe 9 anliegenden Ende einen dem Innendurchmesser des ersten Gehäuseteils 2 entsprechenden Außendurchmesser auf.

Das erste Rahmenteil 12 weist eine radial umlaufende, zur Seite des zweiten Rahmenteils 13 offene Ringnut 15 auf, in die ein Ringansatz 16 des zweiten Rahmenteils 13 hineinragt und mit seiner äußeren radial umlaufenden Mantelfläche 17 an der radial äußeren Nutenwand 18 der Ringnut 15 geführt ist.

Bei in die Ringnut 15 eingeführtem Ringansatz 16 verbleibt ein Ringraum 19 in der Ringnut 15, der am Mündungsbereich der Ringnut 15 über einen Ringschlitz 20 mit der Durchgangsöffnung 14 verbunden ist.

Eine gasdurchlässige aber flüssigkeitsundurchlässige Filtermembran 21 verschließt die Durchgangsöffnung 14 und ragt mit ihrem radial umlaufenden Randbereich 22 durch den Ringschlitz in den Ringraum 19, wobei der in den Ringraum 19 ragende Teil des Randbereichs 22 abgebogen ist und sich annähernd koaxial zur Längsachse 23 von Filtergehäuse 1 und Durchgangsöffnung 14 erstreckt. Bei der Montage der Filtereinheit 11 wurde der Ringraum 19 mit einem aushärtbaren Kleber gefüllt, dann der Randbereich 22 der die Durchgangsöffnung 14 verschließenden Filtermembran 21 in den Ringraum 19 eingeführt und die beiden Rahmenteile 12 und 13 zusammengesteckt. Durch den dann ausgehärteten Kleber im Ringraum 19 ist die Filtermembran 21 fest mit dem Rahmen 10 und auch die Rahmenteile 12 und 13 fest miteinander verbunden.

Zu beiden Seiten der Filtermembran 21 ist jeweils ein Drahtgitter 24 angeordnet, wobei beide Drahtgitter 24 mit ihrem radial umlaufenden Randbereich in den Ringschlitz 20 ragen und so mit dem Rahmen 10 verbunden sind. Durch die Drahtgitter 24 ist die Filtermembran 21 daran gehindert axial auszulenken.

Das erste Rahmenteil 12 weist einen sich koaxial zum zweiten Gehäuseteil 3 hin erstreckenden Rohransatz 27 auf, der mit seiner radial umlaufenden Mantelfläche an der Innenwand des ersten Gehäuseteils 2 geführt und mit seiner Stirnseite am Boden 6 abgestützt ist.

An der Mantelfläche des Rohransatzes 27 ist eine radial umlaufende Nut 28 ausgebildet, in die ein Dichtring 29 eingesetzt ist, der mit Vorspannung an der Innenwand des ersten Gehäuseteils 2 in Anlage ist.

Der Ringansatz 8 ist an drei um jeweils 90° versetzten Stellen durch Unterbrechungen 25 unterbrochen, wobei sich die Unterbrechungen 25 bis in den Boden 6 hinein und dort um eine Vertiefung 26 radial nach innen erstrecken.

Über die Vertiefungen 26, die Unterbrechungen 25, den Ringspalt 30 zwischen erstem Gehäuse 2 und zweitem Gehäuse 3 sowie der Stirnseite 4 und dem Anschlag 5 ist ein Notentlüftungskanal gebildet.

Das Filtergehäuse 1 ist in seiner Einbaulage am Kraftfahrzeug dargestellt. Dabei befindet sich die Filtermembran 21 mit ihrer Ebene in einer senkrechten Ausrichtung.

Der Innenraum des ersten Gehäuseteils 2 des Filtergehäuses 1 auf der linken Seite der Filtermembran 21 ist in seinem unteren Bereich mit einem ersten Anschlussstutzen 31 versehen, an den ein Schlauch 40 anschließbar ist, der zum Inneren eines nicht dargestellten Achsgehäuses führt.

Dem ersten Anschlussstutzen 31 koaxial gegenüberliegend in den Innenraum des zweiten Gehäuseteils 3 einmündend besitzt das zweite Gehäuseteil 3 einen zweiten Anschlussstutzen 32, der nach unten gerichtet ist und an den ein weiter nach unten gerichteter zweiter Schlauch 41 anschließbar ist, der mit seinem freien Ende abgeschrägt in die Umgebung mündet.

Der sich annähernd waagrecht mit geringer Neigung zum Schlauch 40 hin erstreckende erste Anschlussstutzen 31 weist einen Querschnitt auf, der größer ist als der Querschnitt, bei dem die Oberflächenspannung des Öls in der Lage ist den Anschlussstutzen 31 in dem Temperaturbereich und Druckbereich, in dem die Be- und Entlüftungsvorrichtung zu betreiben ist, zu verschließen.

Zum Zusammenbau der Be- und Entlüftungsvorrichtung wird zunächst die austauschbare Filtereinheit 11 in das erste Gehäuseteil 2 eingesetzt und dann das zweite Gehäuseteil 3 auf das erste Gehäuseteil 2 bis zur Anlage am Anschlag 5 aufgeschoben.

Auf jeder Seite des ersten Gehäuseteils 2 sind außen jeweils zwei parallel im Abstand zueinander sich axial erstreckende Rastarme 33 vorhanden, die mit ihrem einen Ende an dem anschlagseitigen Ende des ersten Gehäuseteils 2 befestigt sind und an ihren freien Enden einander zugewandte Rasten 34 aufweisen.

Das zweite Gehäuseteil 3 weist entsprechend den Paaren von Rastarmen 33 sich axial erstreckende Rastnocken 35 auf, an denen beim Zusammenfügen der Gehäuseteile 2 und 3 federnd voneinander weggespreizt entlanggleiten und beim Erreichen des Endes der Rastnocken 35 diese hintergreifen und so die Gehäuseteile 2 und 3 zusammen halten. Die freien Enden 36 der Rastarme 33 werden in der zusammengefügten Position der Gehäuseteile 2 und 3 in Ausnehmungen 37 am zweiten Gehäuseteil 3 eingeführt, die ein selbsttätiges Herausbewegen der Rastnocken 35 aus ihrer Hintergreifposition verhindern. Die Ausnehmungen 37 sind an einem radial flanschartig hervorstehenden Ansatz 38 des zweiten Gehäuseteils 3 ausgebildet.

Um die Filtereinheit 11 zwecks eines Austauschs leicht wieder aus dem ersten Gehäuseteil 2 des geöffneten Filtergehäuses 1 herausziehen zu können, ist an dem ersten Rahmenteil 12 ein von der Filtermembran weggerichtetes, axial hervorstehendes Griffteil 39 angeordnet.

### Bezugszeichen

- 1: Filtergehäuse
- 2: erstes Gehäuseteil
- 3: zweites Gehäuseteil
- 4: Stirnseite
- 5: Anschlag
- 6: Boden
- 7: Innenwand
- 8: Ringansatz
- 9: Ringstufe
- 10: Rahmen
- 11: Filtereinheit
- 12: erstes Rahmenteil
- 13: zweites Rahmenteil
- 14: Durchgangsöffnung
- 15: Ringnut
- 16: Ringansatz
- 17: Mantelfläche
- 18: äußere Nutenwand
- 19: Ringraum
- 20: Ringschlitz
- 21: Filtermembran
- 22: Randbereich
- 23: Längsachse
- 24: Drahtgitter
- 25: Unterbrechungen
- 26: Vertiefung
- 27: Rohransatz
- 28: Nut
- 29: Dichtring
- 30: Ringspalt
- 31: erster Anschlussstutzen
- 32: zweiter Anschlussstutzen
- 33: Rastarme
- 34: Rasten
- 35: Rastnocken
- 36: freie enden
- 37: Ausnehmungen
- 38: Ansatz
- 39: Griffteil
- 40: erster Schlau
- 41: zweiter Schlauch

## Patentansprüche

1. Be- und Entlüftungsvorrichtung für einen Öl enthaltenden geschlossenen Behälter eines Kraftfahrzeugs, mit einem den Behälter mit der Atmosphäre verbindenden Leitung, die bei Volumenänderungen im Behälter einen Druckausgleich zur Umgebung ermöglicht, mit einem in der Leitung angeordneten gasdurchlässigen, flüssigkeitsundurchlässigen Filterelement (21), mit einem von dem Behälter zum Filterelement (21) führenden ersten Teil (31) der Leitung und einem von dem Filterelement (21) zur Umgebung führenden zweiten Teil (32) der Leitung, wobei das in die Umgebung mündende Ende des von dem Filterelement (21) zur Umgebung führenden zweiten Teils (32) der Leitung auf einem tieferen Niveau als der erste Teil (31) der Leitung liegt, **dadurch gekennzeichnet, dass** der Querschnitt des ersten Teils (31) der Leitung mindestens so groß ist, dass die Oberflächenspannung von in diesem ersten Teil (31) der Leitung befindlichem Öl geringer ist, als sie zum Verschließen des Querschnitts des ersten Teils (31) der Leitung erforderlich ist.

2. Be- und Entlüftungsvorrichtung nach Anspruch 1, **dadurch gekennzeichnet, dass** der erste Teil (31) der der Leitung einen annähernd waagrechten Abschnitt aufweist.

3. Be- und Entlüftungsvorrichtung nach Anspruch 2, **dadurch gekennzeichnet, dass** der annähernd waagrechte Abschnitt des ersten Teils (31) der Leitung eine geringe Neigung zum Behälter hin aufweist.

4. Be- und Entlüftungsvorrichtung nach einem der vorhergehenden Ansprüche, **dadurch gekennzeichnet, dass** der Behälter ein Getriebegehäuse oder ein Achsgehäuse ist.

5. Be- und Entlüftungsvorrichtung nach einem der vorhergehenden Ansprüche, **dadurch gekennzeichnet, dass** sich der zur Umgebung führende zweite Teil (32) der Leitung vom Filterelement (21) aus ganz oder teilweise annähernd vertikal nach unten erstreckt.

6. Be- und Entlüftungsvorrichtung nach einem der vorhergehenden Ansprüche, **dadurch gekennzeichnet, dass** das Filterelement (21) eine Membran ist.

7. Be- und Entlüftungsvorrichtung nach Anspruch , **dadurch gekennzeichnet, dass** die Ebene der Membran (21) sich annähernd vertikal erstreckt.

8. Be- und Entlüftungsvorrichtung nach Anspruch 7, **dadurch gekennzeichnet, dass** der erste Teil (31) und/oder der zweite Teil (32) der Leitung an dem unteren Bereich des Filterelements (21) zum Filterelement (21) hin münden.

9. Be- und Entlüftungsvorrichtung nach einem der vorhergehenden Ansprüche, **dadurch gekennzeichnet, dass** der erste und/oder der zweite Teil (31, 32) der Leitung ganz oder teilweise als Rohr und/oder als flexibler Schlauch (40, 41) ausgebildet ist.

10. Be- und Entlüftungsvorrichtung einem der vorhergehenden Ansprüche, **dadurch gekennzeichnet, dass** das zur Umgebung führende Ende des zweiten Teils (32) der Leitung abgeschrägt ausgebildet ist.
